# EUROPÄISCHE PATENTSCHRIFT

(11) **EP 0 613 001 B1**
(45) Veröffentlichungstag und Bekanntmachung des Hinweises auf die Patenterteilung: **19.05.1999**
(21) Anmeldenummer: 94101622.2
(22) Anmeldetag: 03.02.1994
(51) Int. Cl.: G01N 27/416, G01N 27/36

(54) **Verfahren zum Messen des pH-Wertes einer Messlösung mit Glaselektroden-Messketten und zum zeitgleichen Kalibrieren der Messketten**
Method for measuring the pH of a solution using glass electrodes with simultaneous calibration of the electrodes
Procédé de mesure du pH d'une solution utilisant un système d'électrodes en verre et avec étalonnage simultané des électrodes

(30) Priorität: 04.02.1993 DE 4303187; 10.08.1993 DE 4326764
(43) Veröffentlichungstag der Anmeldung: 31.08.1994
(73) Patentinhaber: HOECHST AKTIENGESELLSCHAFT, 65929 Frankfurt am Main (DE)
(72) Erfinder: Melzer, Werner, Prof. Dr., D-65835 Liederbach (DE)

(56) Entgegenhaltungen:
- EP-A- 0 060 533
- DE-A- 2 617 045
- US-A- 3 862 895
- KORRESPONDENZ ABWASSER, Bd.37, Nr.10, Oktober 1990, AUGUSTIN DE Seiten 1233 - 1236 PUTZIEN J ET AL : 'Modernes Kalibrierverfahren kontinuierlich betriebener pH-Messeinrichtungen auf Kläranlagen'

## Beschreibung

Die Erfindung betriffl ein Verfahren zum Messen des pH-Wertes einer Meßlösung mit Glaselektroden-Meßketten und zum zeitgleichen Kalibrieren der Meßketten, bei dem die an der pH-Glaselektroden und der Bezugselektroden auftretenden Potentiale in einem pH-Meter mit Temperaturkompensation und Meßkettensteilheitbildung verarbeitet werden.

Meßketten, bei denen mehrere Glaselektroden in einer elektrischen Schaltung miteinander verbunden sind, sind beispielsweise aus der EP-A-0 060 533 und der US-A-3 862 895 bekannt, die jedoch keine Einrichtungen zum Messen des pH-Wertes und zum zeitgleichen Kalibrieren der Meßketten offenbaren.

Während der Meßkettennullpunkt moderner pH-Meßketten weitgehend stabil bleibt, muß die Meßketteneinheit in gewissen Zeitabständen kalibriert werden. Hierzu werden die Meßketten aus dem Behälter, dem Durchlaufgefäß oder Rohr ausgebaut und extern in bekannten Puffern (Kalibrierlösungen) kalibriert. Dabei werden die Meßkettendaten, wie Meßkettennulpunkt und Meßkettensteilheit ermittelt und deren Abweichungen am pH-Meter kompensiert. Der Kalibriervorgang kann oft nicht bei Prozeßtemperaturen, sondern nur bei Raumtemperatur durchgeführt werden. Der Aufwand beträgt ein bis zwei Stunden. Eine häufige Kalibrierung, z.B. zur Steigerung der Meßgenauigkeit, muß aus diesem Grunde und auch wegen er damit verbundenen Kosten meist unterbleiben.

Es ist ferner bekannt, die Meßketten pneumatisch aus der Meßlösung herauszufahren und mit Spüllösungen und Kalibrierlösungen zu beaufschlagen. Die dabei festgestellten Abweichungen der Meßkettenparameter werden im pH-Meter kompensiert. Solche Vorrichtungen sind relativ aufwendig und teuer. Problematisch ist insbesondere der mit der pneumatischen Bewegung der Meßkette verbundene Verschleiß und die einwandfreie Abdichtung der Meßflüssigkeit, d.h. deren Rückhaltung im Behälter.

Die Erfindung vermeidet diese Nachteile. Die Meßkette verbleibt stets in der fixierten Position der Meßstelle.

Die Erfindung löst die Aufgabe durch ein Verfahren der eingangs genannten Art, das dadurch gekennzeichnet ist, daß man die Potentiale aus einer Bezugselektrode und zweier pH-Glaselektroden, die Innenpuffer mit unterschiedlichen pH-Werten aufweisen und die zusammen mit der Bezugselektrode in der Meßlösung angeordnet sind, in einem ersten und einem zweiten pH-Meter verarbeitet und aus den verarbeiteten Potentialen die Meßkettensteilheit und mit der Steilheit zeitgleich den Meßwert bildet.

Zur Durchführung des Verfahrens eignet sich eine pH-Meßkette aufweisend:
a) eine erste Glaselektrode, die einen ersten Innenpuffer enthält,
b) eine zweite Glaselektrode, die einen zweiten Innenpuffer enthält,
c) eine Bezugselektrode,
wobei
d) der pH-Wert des ersten Innenpuffers von dem des zweiten Innenpuffers verschieden ist,
e) die erste Glaselektrode zusammen mit der Bezugselektrode mit einem ersten pH-Meter verbunden ist und
f) die zweite Glaselektrode zusammen mit der Bezugselektrode mit einem zweiten pH-Meter verbunden ist.

Bei einer alternativen Ausführungsform der Meßkette kann der Elektodenraum der Glaselektrode durch eine Trennwand in zwei Räume unterteilt sein und jeder Raum mit einer Ableitelektrode und einem Innenpuffer versehen sein. Die Trennwand kann aus einem Glasrohr bestehen, die im Elektrodenraum der Glaselektrode angeordnet ist und diesen in zwei Räume unterteilt, die je eine Arbeitselektrode und unterschiedliche Innenpuffer enthalten und durch eine Glasmembran verschlossen sind.

Die Vorteile der Erfindung sind im wesentlichen darin zu sehen, daß sich die Meßkettensteilheit, der wichtigste Parameter, ohne Ausbau der Meßkette,also am Meßort direkt und ohne Austausch der Innenpuffer zeitgleich mit der Meßwertbildung kalibrieren läßt. Die Kalibrierung findet bei der jeweils vorliegenden Produkttemperatur statt. Der Aufwand für Steuerung bzw. Auswertung des Kalibriervorgangs ist gering.

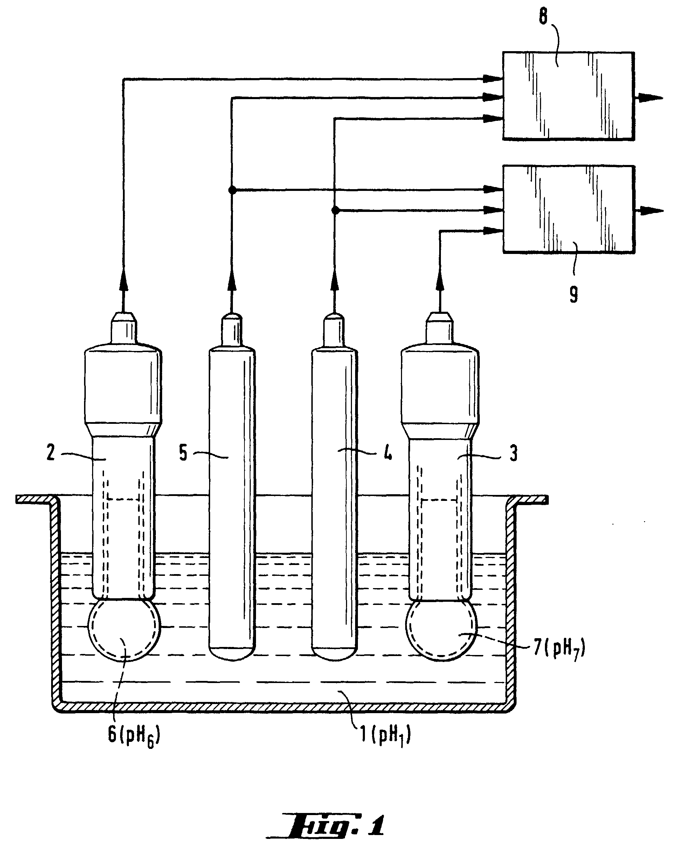

Im folgenden wird die Erfindung anhand der Figuren in beispielsweiser Ausführung näher erläutert. Es zeigt
Fig. 1 ein Schaltschema und die Meßkette zur Durchführung des Verfahrens,
Fig. 2 eine Glaselektrode zur Durchführung des Verfahrens und
Fig. 3 einen Ausschnitt einer alternativen Ausführungsform der Glaselektrode.

In der Meßlösung 1 mit dem unbekannten pH-Wert pH₁ sind zwei pH-Glaselektroden 2 und 3, eine Bezugselektrode 4 und ein Temperaturfühler 5 angeordnet. Die Glaselektroden 2 und 3 weisen unterschiedliche Innenpuffer 6 und 7 mit jeweils bekanntem pH-Wert pH₆ und pH₇ auf. Die Glaselektrode 2 ist mit der Bezugselektrode 4 mit dem pH-Meter 8 und die Glaselektrode 3 ist mit der Bezugselektrode 4 mit dem pH-Meter 9 verbunden. Beide pH-Meter sind mit einer Temperaturkompensation versehen. Aus den in den pH-Metern 8 und 9 verarbeiteten Potentialen aus Glaselektrode und Bezugselektrode wird die Meßkettensteilheit und zeitgleich mit der Steilheit der Meßwert, d. h. der pH-Wert der Meßlösung gebildet. Die Meßkettensteilheit ist der Quotient aus der Differenz der gemessenen Potentiale und der Differenz der bekannten pH-Werte pH₆ und pH₇ der Innenpuffer 6 und 7. Bei Verwendung von pH-Glasmeßketten, bei denen die einzelnen Glaselektroden unterschiedliche Steilheiten aufweisen, wird das Potential einer der pH-Glaselektroden durch den Quotienten dividiert, der aus den einzelnen Steilheiten der pH-Glaselektroden bei Raumtemperatur gebildet wird. Mit der fortlaufenden Bestimmung der Meßkettensteilheit, die im ordnungsgemäßen Zustand der Ketten unabhängig von Änderungen des pH-Wertes der Meßlösung ist, können nicht zulässige Änderungen sofort bemerkt und im pH-Meter korrigiert werden. Für die Bildung des Meßwertes kann entweder das im pH-Meter 8 oder das im pH-Meter 9 verarbeitete Potential verwendet werden. Es können auch die in beiden pH-Metern verarbeiteten Potentiale verwendet werden. Die aus den pH-Metern kommenden Signale können auch auf Übereinstimmung der pH-Werte der Meßlösung überwacht werden (Teilredundanz). Man stellt die pH-Werte der Innenpuffer 6 und 7 so ein, daß pH₆<pH₁<pH₇ oder pH₆>pH₁>pH₇ ist.

Eine unzulässige Abnahme der Meßkettensteilheit einer oder auch beider Meßketten wird so besonders frühzeitig erfaßt.

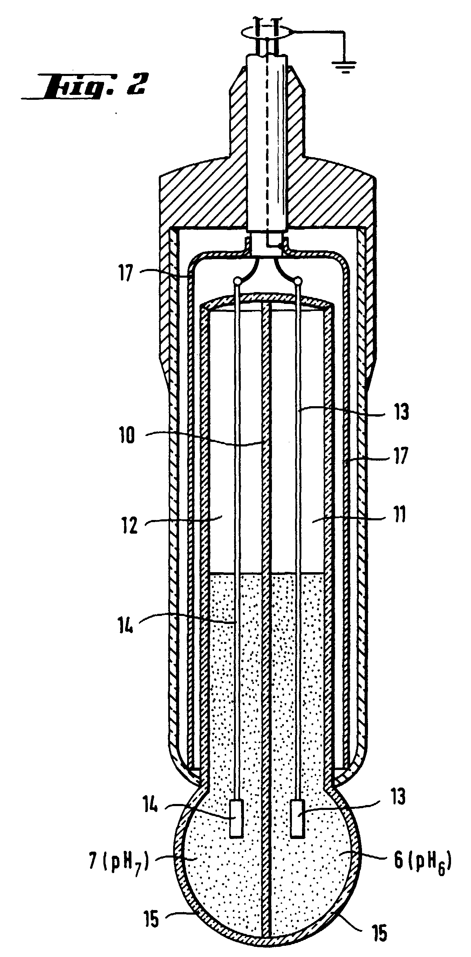

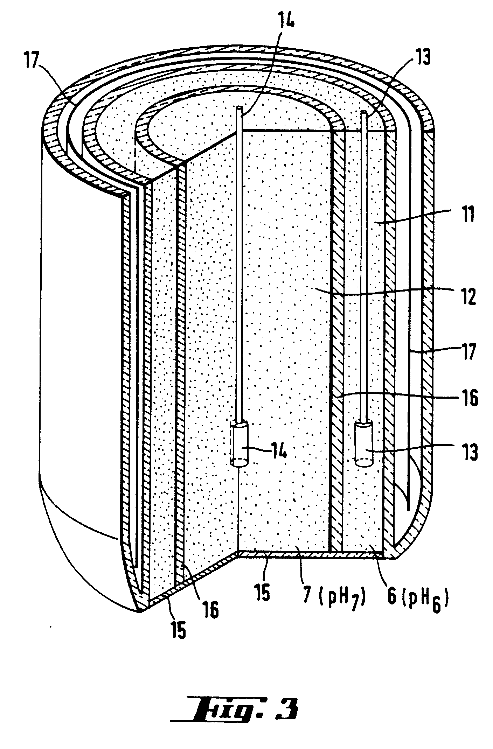

Bei der pH-Glaselektrode gemäß Fig. 2 ist der Elektrodenraum durch eine Trennwand (10) in zwei Räume (11,12) unterteilt. Jeder Raum (11,12) ist mit einer Ableitelektrode (13,14) und einem Innenpuffer (6,7) versehen. Die Räume (11,12) sind durch eine Glasmembran (15) verschlossen. Bei der Ausführungsform gemäß Fig. 3 besteht die Trennwand aus einem Glasrohr (16), das konzentrisch im Elektrodenraum der Glaselektrode angeordnet ist und diesen in zwei Räume (11,12) unterteilt, die durch die Glasmembran (15) verschlossen sind. (17) deutet die auf Masse liegende Abschirmung an.

## Patentansprüche

1. Verfahren zum Messen des pH-Wertes einer Meßlösung mit Glaselektrodenmeßketten und zum zeitgleichen Kalibrieren der Meßketten, bei dem die an der pH-Glaselektrode und der Bezugselektrode auftretenden Potentiale in einem pH-Meter mit Temperaturkompensation und Meßkettensteilheitbildung verarbeitet werden, dadurch gekennzeichnet, daß man die Potentiale aus einer Bezugselektrode (4) und zweier pH-Glaselektroden (2,3), die Innenpuffer (6,7) mit unterschiedlichen pH-Werten aufweisen und die zusammen mit der Bezugselektrode (4) in der Meßlösung angeordnet sind, in einem ersten (8) und einem zweiten pH-Meter (9) verarbeitet und aus den verarbeiteten Potentialen die Meßkettensteilheit und mit der Steilheit zeitgleich den Meßwert bildet.

2. Verfahren nach Anspruch 1, dadurch gekennzeichnet, daß das Potential einer der pH-Glaselektroden (2,3) durch den Quotienten dividiert wird, der aus den einzelnen Steilheiten der pH-Glaselektroden bei Raumtemperatur gebildet wird.

3. Meßanordnung zum Durchführen des Verfahrens nach Anspruch 1, aufweisend:
a) eine erste Glaselektrode (2), die einen ersten Innenpuffer (6) enthält,
b) eine zweite Glaselektrode (3), die einen zweiten Innenpuffer (7) enthält,
c) eine Bezugselektrode (4),
wobei
d) der pH-Wert des ersten Innenpuffers (6) von dem des zweiten Innenpuffers (7) verschieden ist,
e) die erste Glaselektrode (2) zusammen mit der Bezugselektrode (4) mit einem ersten pH-Meter (8) verbunden ist und
f) die zweite Glaselektrode (3) zusammen mit der Bezugselektrode (4) mit einem zweiten pH-Meter (9) verbunden ist.

4. pH-Glaselektrode, insbesondere zum Durchführen des Verfahrens nach Anspruch 1, dadurch gekennzeichnet, daß der Elektrodenraum der Glaselektrode durch eine Trennwand (10) in zwei Räume (11,12) unterteilt ist und jeder Raum (11,12) mit einer Ableitelektrode und einem Innenpuffer (6,7) versehen ist, und durch eine gemeinsame pH-empfindliche Glasmembran (15) gegen die Meßlösung verschlossen ist, wobei die Innenpuffer (6,7) unterschiedliche pH-Werte aufweisen.

5. pH-Glaselektrode nach Anspruch 4, dadurch gekennzeichnet, daß die Trennwand aus einem Glasrohr (16) besteht, das konzentrisch im Elektrodenraum der Glaselektrode angeordnet ist und diesen in zwei Räume (11,12) unterteilt, die je eine Ableitelektrode (13,14) und die Innenpuffer (6,7) enthalten und durch eine gemeinsame, pH-empfindliche Glasmembran (15) gegen die Meßlösung verschlossen sind.

## Claims

1. A method of measuring the pH value of a test solution with glass-electrode measuring cells and of simultaneously calibrating the measuring cells, in which method the potentials occurring at the pH glass electrode and the reference electrode are processed in a pH meter with temperature compensation and measuring-cell slope derivation, which comprises processing the potentials from a reference electrode (4) and two pH glass electrodes (2, 3), which have internal reference solutions (6, 7) having different pH values and which are arranged in the test solution together with the reference electrode (4), in a first (8) and a second pH meter (9) and deriving the measuring-cell slope from the processed potentials and, together with the slope, simultaneously deriving the measured value.

2. The method as claimed in claim 1, wherein the potential of one of the pH glass electrodes (2, 3) is divided by the quotient which is derived from the individual slopes of the pH glass electrodes at room temperature.

3. A measuring arrangement for carrying out the method as claimed in claim 1, comprising:
a) a first glass electrode (2) containing a first internal reference solution (6)
b) a second glass electrode (3) containing a second internal reference solution (7),
c) a reference electrode (4),
where
d) the pH value of the first internal reference solution (6) is different from that of the second internal reference solution (7),
e) the first glass electrode (2) is connected, together with the reference electrode (4), to a first pH meter (8), and
f) the second glass electrode (3) is connected, together with the reference electrode (4), to a second pH meter (9).

4. A pH glass electrode, in particular for carrying out the method as claimed in claim 1, wherein the electrode space of the glass electrode is subdivided into two spaces (11, 12) by a partition (10) and each space (11, 12) is provided with a reference electrode and an internal reference solution (6, 7) and is sealed from the test solution by a common pH-sensitive glass membrane (15), the internal reference solutions (6,7) having different pH values.

5. The pH glass electrode as claimed in claim 4, wherein the partition comprises a glass tube (16) which is disposed concentrically in the electrode space of the glass electrode and subdivides it into two spaces (11, 12) which each contain a reference electrode (13, 14) and the internal reference solutions (6, 7) and which are sealed from the test solution by a common pH-sensitive glass membrane (15).

## Revendications

1. Procédé de mesure du pH d'une solution à mesurer au moyen de chaînes de mesure composées d'électrodes en verre et d'étalonnage simultané des chaînes de mesure, dans lequel les potentiels présents sur l'électrode de pH en verre et sur l'électrode de référence sont traités dans un pH-mètre avec compensation en température et détermination de la pente de la chaîne de mesure, caractérisé en ce que l'on traite dans un premier pH-mètre (8) et dans un deuxième pH-mètre (9) les potentiels d'une électrode de référence (4) et de deux électrodes de pH (2, 3) qui présentent des tampons internes (6, 7) avec des valeurs de pH différentes et qui sont disposées ensemble avec l'électrode de référence (4) dans la solution à mesurer et en ce que l'on détermine à partir des potentiels traités la pente de la chaîne de mesure et, en même temps que la pente, la valeur mesurée.

2. Procédé selon la revendication 1, caractérisé en ce que le potentiel de l'une des électrodes de pH (2, 3) est divisé par le quotient formé à partir des pentes respectives des électrodes de pH à la température ambiante.

3. Dispositif de mesure pour réaliser le procédé selon la revendication 1, comprenant :
a) une première électrode en verre (2) contenant un premier tampon interne (6),
b) une deuxième électrode en verre (3) contenant un deuxième tampon interne (7),
c) une électrode de référence (4),
dans lequel :
d) le pH du premier tampon interne (6) est différent de celui du deuxième tampon interne (7),
e) la première électrode en verre (2) et l'électrode de référence (4) sont reliées à un premier pH-mètre (8), et
f) la deuxième électrode en verre (3) et l'électrode de référence (4) sont reliées à un deuxième pH-mètre (9).

4. Electrode de pH en verre, destinée en particulier à réaliser le procédé selon la revendication 1, caractérisée en ce que la zone d'électrode de l'électrode en verre est divisée en deux espaces (11, 12) par une paroi séparatrice (10) et en ce que chaque espace (11, 12) est muni d'une électrode de dérivation et d'un tampon interne (6, 7) et fermé vis-à-vis de la solution à mesurer par une membrane en verre (15) commune sensible au pH, les tampons internes (6, 7) présentant des valeurs de pH différentes.

5. Electrode de pH en verre selon la revendication 4, caractérisé en ce que la paroi séparatrice se compose d'un tube en verre (16) qui est disposé concentriquement dans la zone d'électrode de l'électrode de verre et qui divise ladite zone en deux espaces (11, 12) contenant chacun une électrode de dérivation (13, 14) et les tampons internes (6, 7) et fermés vis-à-vis de la solution à mesurer par une membrane en verre (15) commune sensible au pH.
